# EUROPÄISCHE PATENTANMELDUNG

(11) **EP 4 666 854 A1**
(43) Veröffentlichungstag der Anmeldung: **24.12.2025**
(21) Anmeldenummer: 25176250.6
(22) Anmeldetag: 14.05.2025
(51) Int. Cl.: A01L 3/00, A01L 5/00, A01K 13/00

(54) **VORRICHTUNG ZUR FERTIGUNG EINES AN EINEN HUF ANGEPASSTEN KLEBEBESCHLAGS UND/ODER KLEBESCHUHS FÜR EINEN HUF EINES PFERDES UND VERFAHREN DAZU**

(30) Priorität: 17.06.2024 DE 102024117009
(71) Anmelder: Klein, Ruslan, 63607 Wächtersbach (DE)
(72) Erfinder: Klein, Ruslan, 63607 Wächtersbach (DE)
(74) Vertreter: Müller, Jochen

(57) **Zusammenfassung**

Eine Vorrichtung (1) zur Fertigung eines an einen Huf (2) eines Pferdes angepassten Klebebeschlags und/oder Klebeschuhs umfasst ein Umschlingungsband (4) zur Befestigung an einer Hufwand, das an seinem freien Ende eine an die Größe des Hufs (2) angepasste Grundplatte (5) haltert, die mehrere Injektionsöffnungen (12) aufweist.

## Beschreibung

Die Erfindung bezieht sich auf eine Vorrichtung zur Fertigung eines an einen Huf eines Pferdes angepassten Klebebeschlags und/oder Klebeschuhs und ein Verfahren zur Fertigung eines an einen Huf angepassten Klebebeschlags und/oder Klebehufschuhs mit einer Vorrichtung.

Es ist bekannt, einen Hufbeschlag, z.B. ein Hufeisen, an einen Huf eines Pferds zu nageln oder zu kleben, wobei in beiden Fällen der Hufbeschlag für eine komplette Beschlags-Periode von ca. vier bis sieben Wochen am Huf des Pferds bleiben soll. Eine Verbindung zwischen Hufeisen und Huf wird somit durch Nägel oder Klebstoff hergestellt. Beim Wechseln des Hufbeschlags wird das alte Hufeisen abgenommen und anschließend nach fachgerechter Bearbeitung des Hufes ein neues Hufeisen mit einer neuen Verbindung aus Nägeln oder Klebstoff an dem Huf des Pferds befestigt. Beim Nageln wird im Zuge der Befestigung des Hufbeschlags am Huf durch die Nägel die Hufwand des Pferds teilweise zerstört, so dass potentielle Angriffsflächen für eine weitere Zerstörung (z.B. mechanisch oder biologisch) verursacht werden.

Im Fall eines kranken Hufs bzw. eines Hufs mit einer relativ dünnen umfangsseitigen Hufwand ist ein Nageln des Hufeisens häufig nicht möglich, da beispielsweise ein Ausbrechen der Hufwand nicht auszuschließen ist. Auch bei einem abgetretenen Hufeisen und einer abgerissenen Hufwand ist ein Nageln in der Regel nicht möglich.

Beim Kleben, vor allem wenn Zwei-Komponenten-Kleber, z.B. Epoxidharz-Kleber, zum Einsatz kommen, können die äußeren Hornschichten auf Dauer angegriffen werden, womit ähnliche Nachteile wie beim Nageln verbunden sind. Weiterhin ist die Klebe-Technik mit relativ hohen Kosten verbunden, ist sehr zeitaufwendig und erfordert viel Expertise bei der Durchführung.

Aus der US 1 761 241 A ist ferner ein Hufeisen mit drei daran lösbar befestigten L-förmigen Fingern bekannt, welche zur Befestigung an einem Huf mehrere nach innen orientierte Zähne und Zacken aufweisen. Weiterhin weist das Hufeisen eine elastische Lauffläche auf.

Die EP 3 103 331 B1 offenbart einen Beschlag für einen Huf eines Equiden mit einer Grundplatte und damit verbundenen Aufzügen, wobei die Aufzüge Hufwand-Befestigungsmittel aufweisen, die dazu eingerichtet sind, die Aufzüge reversibel lösbar an einer Hufwand des Equiden zu befestigen. Die Aufzüge weisen einen winkelförmigen Querschnitt auf, wobei jeweils wenigstens ein Hufwand-Schenkel zur Befestigung an der Hufwand des Equiden eingerichtet ist und jeweils wenigstens ein Grundplatten-Schenkel der Aufzüge zur Befestigung an der Grundplatte eingerichtet ist. Die Grundplatte weist einen Schacht zur bereichsweisen Aufnahme des Aufzuges aufweist, wobei der Schacht und der Aufzug dazu eingerichtet sind, reversibel lösbar miteinander verbunden zu werden. Die Hufwand-Befestigungsmittel umfassen einen Teil eines Klettverschlusses und die Grundplatten-Schenkel weisen strukturierte Oberflächen mit Zähnen auf, die in eine gemeinsame Richtung zeigen und verrastend mit Zähnen in den Oberflächen der Schächte zusammenwirken.

Aus der Praxis sind zum Schutz der Hufe auch Hufschuhe bekannt, die in der Regel eine profilierte Grundfläche und einen Hufwand-Umfassungsabschnitt umfassen. Hufschuhe werden bei einem unbeschlagenen Pferd zum Schutz vor einer übermäßigen Abnutzung des Hufs angelegt. Hufschuhe werden auch bei einer Umstellung von einem Hufeisenbeschlag auf Barhuf verwendet.

Hufschuhe zum Ankleben an den Huf werden in der Praxis häufig als Klebeschuhe bezeichnet und eignen sich prinzipiell für alle Disziplinen des Pferdesports sowie das Freizeitreiten. Sie eignen sich beispielsweise zur Verwendung bei Fohlen, deren Hufe aufgrund von Durchtrittigkeit, Bockhufigkeit oder anderen Stellungsfehlern korrigiert werden müssen, da bei kleinen Hufen mit dünnen Hufwänden genagelte orthopädische Beschläge nahezu nicht verwendbar sind. Auch bei Huferkrankungen und Hufverletzungen erwachsener Pferde haben sich Klebeschuhe bewährt und kommen bei einer geschädigten, insbesondere brüchigen Hufwand zur Verwendung, damit sich der Huf regenerieren kann.

Im Weiteren ist so genanntes Kunsthorn bekannt, das als Hornersatz zur Ausbesserung geschädigter Hufwände zum Einsatz kommt. Im Weiteren findet Kunsthorn beispielsweise bei der Korrektur oder Entlastung von abgelaufenen Hufen Anwendung, damit beispielsweise Horn nachwachsen kann. Es ist auch möglich Beschläge mit Kunsthorn anzukleben.

Der Erfindung liegt die Aufgabe zugrunde, eine Vorrichtung und ein Verfahren der eingangs genannten Art zu schaffen, die bzw. das eine individuelle Versorgung eines Hufs ermöglicht.

Erfindungsgemäß wird die Aufgabe vorrichtungsgemäß dadurch gelöst, dass ein Umschlingungsband zur Befestigung an einer Hufwand an seinem freien Ende eine an die Größe des Hufs angepasste Grundplatte haltert, die mehrere Injektionsöffnungen aufweist.

Verfahrensgemäß wird die Aufgabe nach der Erfindung dadurch gelöst, dass das Umschlingungsband und die Grundplatte an einem Huf eines Pferdes befestigt werden, durch die Injektionsöffnungen eine Ausgussmasse in die zwischen dem Umschlingungsband und der Grundplatte zum einen und dem Huf zum anderen vorliegenden Hohlräume gespritzt wird und nach dem Aushärten der Ausgussmasse das Umschlingungsband und die Grundplatte entfernt werden.

Mit der Vorrichtung und dem Verfahren ist die Ausstattung bzw. Behandlung auch eines kranken Hufs bzw. eines Hufs mit einer relativ dünnen umfangsseitigen Hufwand, bei dem ein Nageln des Beschlags problematisch ist, problemlos möglich.

Das Umschlingungsband und die Grundplatte können einstückig bzw., einteilig sein oder separate Teile sein. Die Grundplatte wird derart aus einem Sortiment von Grundplatten unterschiedlicher Größen ausgewählt, dass sie in etwa die Unterseite des Hufs überdeckt. Das Umschlingungsband weist eine Länge auf, die in etwa dem Umfang der zu behandelnden Hufwand entspricht. Es ist für den Fachmann selbstverständlich, dass analog zu konventionellen Hufeisen insbesondere Grundplatten unterschiedlicher Größen für Pferde mit unterschiedlich großen Hufen bereitzustellen sind. Beispielsweise benötigt ein Pony einen kleineren Klebebeschlag bzw. Klebeschuh als ein ausgewachsenes Pferd.

Das Umschlingungsband kann in seinem Verlauf über die Breite an die Geometrie einer Hufwand angepasst sein, wonach auf einen relativ konstanten Verlauf eine etwa konische Verjüngung erfolgt. Das Umschlingungsband kann aus einem Gewebematerial oder einem verhältnismäßig formbeständigen, aber dennoch flexiblen Kunststoff hergestellt sein. Das Umschlingungsband wird derart an dem Huf befestigt, dass es unterseitig übersteht, um die Grundplatte zu umschlingen und an dem Huf zu haltern.

Sind das Umschlingungsband und die Grundplatte an dem Huf befestigt, wird durch die Injektionsöffnungen eine relativ schnell härtende Ausgussmasse eingespritzt, die die Hohlräume zwischen dem Umschlingungsband und der Grundplatte zum einen und dem Huf zum anderen ausfüllt. Nach dem Aushärten der Ausgussmasse werden das Umschlingungsband und die Grundplatte entfernt und die gehärtete Ausgussmasse kann mechanisch nachbearbeitet werden. Die Ausgussmasse kann beispielsweise zur Regeneration des Horns des Pferdehufs über eine übliche Zeitspanne an dem Huf verbleiben. Als Ausgussmasse stehen verschiedene aus dem Stand der Technik bekannte Produkte zur Verfügung, vorzugsweise wird so genanntes Kunsthorn verwendet, das sich in der Praxis bewährt hat. Der Huf kann anschließend in üblicherweise beansprucht werden und ist mit dem individuell angepassten Klebebeschlag bzw. Klebehufschuh geschützt.

In Ausgestaltung weisen die Grundplatte und das Umschlingungsband zur gegenseitigen Halterung einen Absatz und/oder eine Nut und eine dazu korrespondierende Feder und/oder Hinterschnitte mit dazu korrespondierenden Hintergriffen auf. Die vorgenannten Verbindungstechniken sollen zum einen ein relativ einfaches Fügen der Grundplatte und des Umschlingungsbandes bei der Hufbehandlung ermöglichen und zum anderen ein Austreten der Ausgussmasse aus dem durch das Umschlingungsband und die Grundplatte begrenzten Hohlraum am Huf verhindern.

Vorzugsweise ist das Umschlingungsband in seiner Geometrie an eine Hufwand angepasst ist und mindestens ein Verschlusselement aufweist. Zur Versorgung unterschiedlicher Hufe stehen insbesondere unterschiedlich hohe und unterschiedlich lange Umschlingungsbänder zur Verfügung. Als Verschlusselemente kommen beispielsweise beliebige Verschlüsse, die beispielsweise von Gürteln bekannt sind wie Dornschnallen, Doppeldornschnallen, Plattenschnallen, Koppelschnallen, O-Ringe, D-Ringe oder dergleichen oder auch Klettverschlüsse oder Druckknopfanordnungen in Frage, wobei die vorgenannten Verschlusselemente eine beispielhafte Aufzählung darstellen und nicht abschließend zu verstehen sind.

In weiterer Ausgestaltung ist das Umschlingungsband mit Injektionsöffnungen versehen. Sonach lassen sich auch von dem Umschlingungsband überdeckte Hohlräume in der Hufwand mit der Ausgussmasse füllen. Um einen den Huf abschnittsweise und relativ dickwandig mit einem gegossenen Hufschuh zu umschließen, weist bevorzugt das Umschlingungsband innenseitig Distanzelemente auf.

Damit die Gefahr eines Ausrutschens des mit Klebebeschlägen respektive Klebeschuhen ausgestatten Pferdes reduziert ist, weist die Grundplatte zur Fertigung eines Laufprofils innenseitige Erhebungen auf. Die Erhebungen können selbstverständlich zumindest Entformungsschrägen aufweisen, damit eine Entnahme der Grundplatte nach dem Aushärten der Ausgussmasse relativ einfach möglich ist. Das Laufprofil kann rillenartig gestaltet sein oder stollenartige Erhebungen aufweisen.

Zur Behandlung von Fehlstellungen des Hufes und/oder ungleichmäßig abgenutzter Hufe und/oder Schaffung von Entlastungszonen ist nach einer Weiterbildung die Grundplatte innenseitig mit keilförmigen Schrägen und/oder Erhebungen oder Vertiefungen ausgestattet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

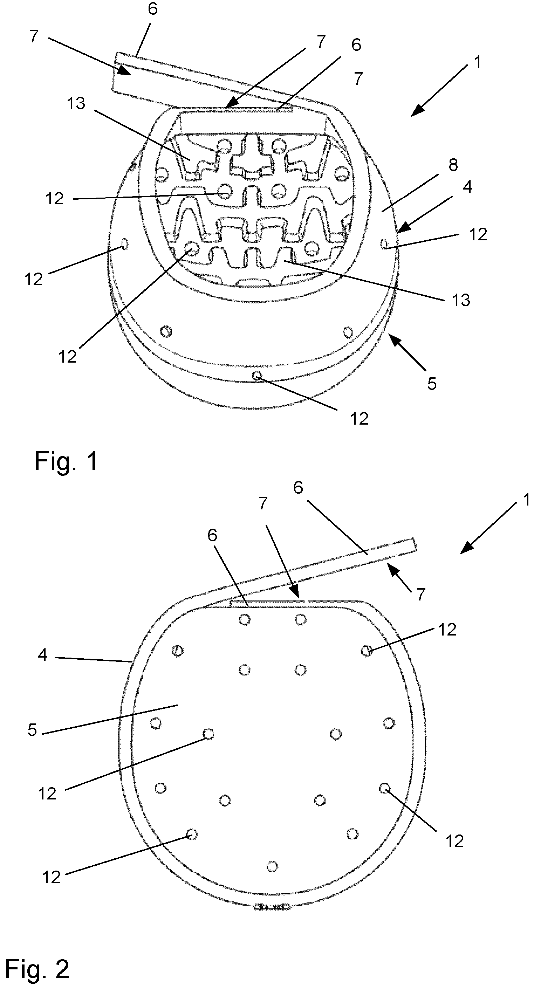

- Fig. 1: eine erste perspektivische Darstellung der Vorrichtung nach der Erfindung,
- Fig. 2: eine Ansicht der Vorrichtung nach Fig. 1 von unten,

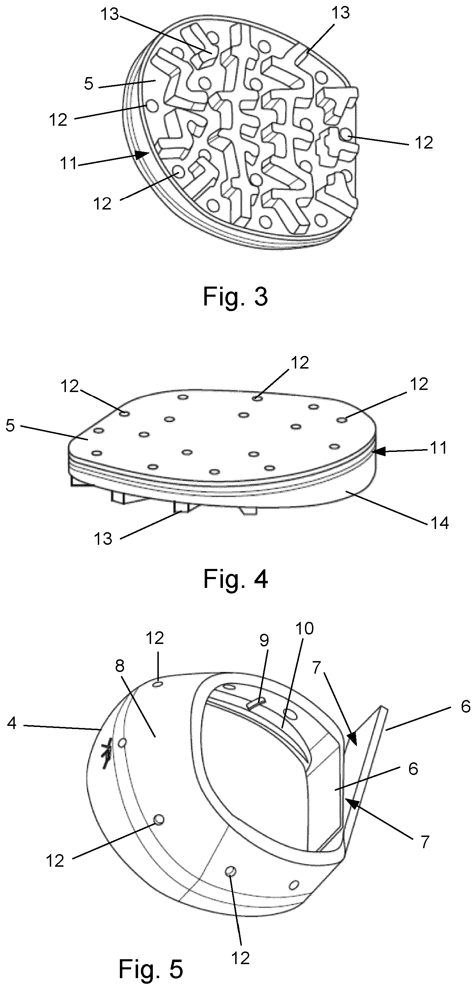

- Fig. 3: eine erste perspektivische Darstellung einer Grundplatte der Vorrichtung nach Fig. 1,
- Fig. 4: eine zweite perspektivische Darstellung der Grundplatte der Vorrichtung nach Fig. 1,
- Fig. 5: eine erste perspektivische Darstellung eines Umschlingungsbandes der Vorrichtung nach Fig. 1,

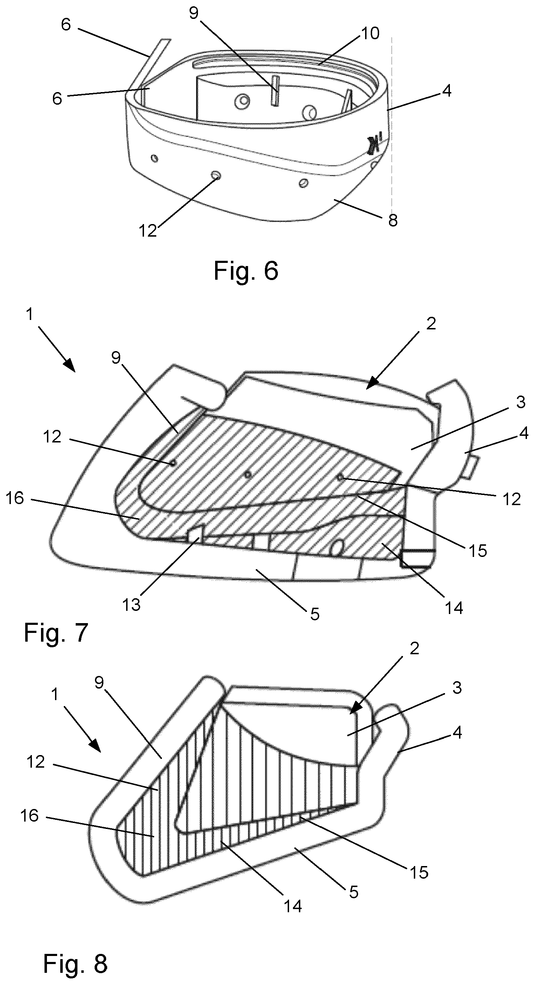

- Fig. 6: eine zweite perspektivische Darstellung eines Umschlingungsbandes der Vorrichtung nach Fig. 1,
- Fig. 7: eine erste schematische Darstellung der Vorrichtung nach Fig. 1 mit einem Huf im Teilschnitt und
- Fig. 8: eine zweite schematische Darstellung der Vorrichtung nach Fig. 1 mit einem Huf im Teilschnitt.

Die Vorrichtung 1 dient zur Herstellung eines individuell an einen Huf 2 eines Equiden angepassten Klebebeschlags oder eines Klebeschuhs wobei der Klebebeschlag nur auf der Unterseite des Hufs 2 also im Wesentlichen auf der Lauffläche oder der Sohle 15 und der Klebeschuh sich in Erweiterung zu dem Klebebeschlag umfangsseitig um die Hufwand 3 erstreckt.

Die Vorrichtung 1 umfasst im Wesentlichen ein Umschlingungsband 4 und eine Grundplatte 5. Das Umschlingungsband 4 besteht aus einem flexiblen Kunststoffmaterial, das sowohl in seiner Breite als auch in seiner Länge an den zu bearbeitenden beziehungsweise zu behandelnden Huf 2 angepasst ist. Längsseitig sind an den freien Enden 6 des Umschlingungsbandes 4 einen Klettverschluss bildende Verschlusselemente 7 angeordnet. In der Breite ist das Umschlingungsband 4 ausgehend von den der Grundplatte 5 zugeordneten Ende im Wesentlichen geradlinig ausgebildet und geht dann in eine an die Hufwand 3 angepasste Schräge 8 über. Innenseitig, also auf der der Hufwand 3 zugewandten Seite sind Distanzelemente 9 angeordnet. Im Weiteren weist das Umschlingungsband 4 Injektionsöffnungen 12 auf. An dem der Grundplatte 5 zugeordneten freien Ende des Umschlingungsbandes 4 ist eine Art Feder 10 ausgebildet, die als Hintergriff in einen korrespondierenden Hinterschnitt der Grundplatte 5 eingreift oder an einem Absatz 11 der Grundplatte 5 anliegt, um diese an dem Huf 2 sohlenseitig zu haltern.

Die Grundplatte 5 ist in ihrer Größe selbstverständlich ebenfalls an die Größe des Hufs 2 angepasst. Hierbei können die Grundplatte 5 und das Umschlingungsband 4 aus einem Sortiment unterschiedlicher Größen ausgewählt werden. Bei einer besonders hochwertigen Versorgung kann der zu behandelnde Huf 3 dreidimensional gescannt und aus den Scan-Daten ein Umschlingungsband 4 und eine Grundplatte 5 konstruiert sowie mit einem 3-D-Drucker gefertigt werden. Zur Bereitstellung eines Laufprofils ist die Injektionsöffnungen 12 aufweisende Grundplatte 5 mit Erhebungen 13 versehen, die in dem Klebebeschlag Profilvertiefungen abbilden.

Zur Versorgung eines ungleichmäßig abgenutzten Hufs 2 und/oder zur Korrektur von Fehlstellungen ist die Grundplatte 5 innenseitig mit keilförmigen Schrägen 14 oder dergleichen versehen, wobei Erhebungen und/oder Vertiefungen der Grundplatte 5 zu auch zu gezielten Entlastungen des Hufs 2 ausgebildet sein können, damit sich an bestimmten Stellen des Hufs 2 gezielt Horn bilden kann.

Zur Fertigung eines an den Huf 2 angepassten Klebebeschlags wird zunächst der Huf 2 fachmännisch gereinigt und vorbereitet. In Weiteren können das gewählte Umschlingungsband 4 und die Grundplatte 5 jeweils innenseitig mit einem Trennmittel beschichtet werden beispielsweise einem Wachs oder einem Gleiteigenschaften aufweisen Kunststoff. Das Umschlingungsband 4 wird um die Hufwand 3 gelegt, die Grundplatte an die Sohle 15 des Huf 2 angelegt und das Umschlingungsband 4 die Grundplatte 5 halternd mit seinen Verschlusselementen 7 befestigt. Durch die Injektionsöffnungen 12 in der Grundplatte 5 wird eine relativ schnell härtende Ausgussmasse 16, die beispielsweise als Kunsthorn ausgebildet ist, eingespritzt. Nach einer Aushärtezeit kann das Umschlingungsband 4 gelöst und von der Hufwand 3 abgenommen werden. Anschließend wird die Grundplatte 5 gelöst und entfernt.

Soll ein an den Huf 2 angepasster Klebeschuh gefertigt werden, wird zusätzlich zu den zuvor erläuterten Vorgängen Ausgussmasse 16 auch in die Injektionsöffnungen12 in dem Umschlingungsband 4 eingespritzt, die mit der sohlenseitigen Ausgussmasse 16 einen monolithischen Klebeschuh bildet.

### Bezugszeichen

- 1.: Vorrichtung
- 2.: Huf
- 3.: Hufwand
- 4.: Umschlingungsband
- 5.: Grundplatte
- 6.: Ende von 4
- 7.: Verschlusselement
- 8.: Schräge von 4
- 9.: Distanzelement
- 10.: Feder
- 11.: Absatz
- 12.: Injektionsöffnung
- 13.: Erhebung
- 14.: Schräge
- 15.: Sohle
- 16.: Ausgussmasse

## Patentansprüche

1. Vorrichtung (1) zur Fertigung eines an einen Huf (2) eines Pferdes angepassten Klebebeschlags und/oder Klebeschuhs, **dadurch gekennzeichnet, dass** ein Umschlingungsband (4) zur Befestigung an einer Hufwand an seinem freien Ende eine an die Größe des Hufs (2) angepasste Grundplatte (5) haltert, die mehrere Injektionsöffnungen (12) aufweist.

2. Vorrichtung (1) nach Anspruch 1, **dadurch gekennzeichnet, dass** die Grundplatte (5) und das Umschlingungsband (4) zur gegenseitigen Halterung einen Absatz (11) und/oder eine Nut und eine dazu korrespondierende Feder (10) und/oder Hinterschnitte mit dazu korrespondierenden Hintergriffen aufweisen.

3. Vorrichtung (1) nach Anspruch 1 oder 2, **dadurch gekennzeichnet, dass** das Umschlingungsband (4) in seiner Geometrie an eine Hufwand (3) angepasst ist und mindestens ein Verschlusselement (7) aufweist.

4. Vorrichtung (1) nach einem der Ansprüche 1 bis 3, **dadurch gekennzeichnet, dass** das Umschlingungsband (4) mit Injektionsöffnungen (12) versehen ist.

5. Vorrichtung (1) nach einem der Ansprüche 1 bis 3, **dadurch gekennzeichnet, dass** das Umschlingungsband (4) innenseitig Distanzelemente (9) aufweist.

6. Vorrichtung (1) nach Anspruch 1 oder 2, **dadurch gekennzeichnet, dass** die Grundplatte (5) zur Fertigung eines Laufprofils innenseitige Erhebungen (13) aufweist.

7. Vorrichtung (1) nach einem der Ansprüche 1 bis 6, **dadurch gekennzeichnet, dass** die Grundplatte (5) innenseitig mit keilförmigen Schrägen (14) und/oder Erhebungen oder Vertiefungen ausgestattet ist.

8. Verfahren zur Fertigung eines an einen Huf (2) angepassten Klebebeschlags und/oder Klebehufschuhs mit einer Vorrichtung (1) nach Anspruch 1, **dadurch gekennzeichnet, dass** das Umschlingungsband (4) und die Grundplatte (5) an einem Huf (2) eines Pferdes befestigt werden, durch die Injektionsöffnungen (12) eine Ausgussmasse (16) in die zwischen dem Umschlingungsband (4) und der Grundplatte (5) zum einen und dem Huf (2) zum anderen vorliegenden Hohlräume gespritzt wird und nach dem Aushärten der Ausgussmasse (16) das Umschlingungsband (4) und die Grundplatte (5) entfernt werden.

9. Verfahren nach Anspruch 8, **dadurch gekennzeichnet, dass** das Umschlingungsband (4) und die Grundplatte (5) mit einem Trennmittel beschichtet werden.
